# EUROPEAN PATENT SPECIFICATION

(11) **EP 4 477 981 B1**
(45) Date of publication and mention of the grant of the patent: **29.04.2026**
(21) Application number: 23461605.0
(22) Date of filing: 16.06.2023
(51) Int. Cl.: F28D 7/16, F28D 7/08, F28D 1/047, B33Y 80/00, F28D 1/053, F28F 1/02, F28F 7/02, F28D 1/02

(54) **HEAT EXCHANGER CORE DESIGN**
WÄRMETAUSCHERKERNDESIGN
CONCEPTION DE NOYAU D'ÉCHANGEUR DE CHALEUR

(43) Date of publication of application: 18.12.2024
(73) Proprietor: Hamilton Sundstrand Corporation, Charlotte, NC 28277 (US)
(72) Inventor: MECZKOWSKI, Tomasz, 51-317 Wroclaw (PL); ZURAW, Sebastian, 51-317 Wroclaw (PL); SIUDZINSKI, Hubert, 51-317 Wroclaw (PL); BOROWSKI, Szymon, 51-317 Wroclaw (PL); ROSCISZEWSKI, Stanislaw, 51-317 Wroclaw (PL); GRZEBSKA, Katarzyna, 51-317 Wroclaw (PL); SLOMA, Wojciech, 51-317 Wroclaw (PL); KELLEY, Ryan, 51-317 Wroclaw (PL); CALDECUTT, Andrew, 51-317 Wroclaw (PL); NGATU, Grum, 51-317 Wroclaw (PL)
(74) Representative: Dehns

(56) References cited:
- US-A1- 2017 205 149
- US-A1- 2017 356 696
- US-A1- 2018 187 984
- US-A1- 2019 033 013
- US-A1- 2021 003 349
- US-A1- 2022 120 502
- US-B2- 11 085 700

## Description

### TECHNICAL FIELD

The present disclosure is concerned with a heat exchanger, specifically the design of the core of a heat exchanger.

### BACKGROUND

Heat exchangers typically work by the transfer of heat between fluid flowing in parallel channels defined by metal plates of a heat exchanger core. A heat exchanger core is generally in the form of a block made up of layers of plates which define the channels through which the fluid flows. The channels are arranged such that hot fluid flows through some channels and cold fluid flows through other channels with the hot and cold channels arranged either vertically or horizontally adjacent each other such that heat is exchanged across the boundary between the channels. Thermal properties are improved by the introduction of turbulence in the flow channels and so, conventionally, a heat exchanger core comprises corrugated metal plates arranged adjacent each other so as to define corrugated flow channels for the heat exchange fluids.

Additive manufacture, or 3D printing, has recently become a preferred manufacturing method for many parts and components due to the fact that it is relatively quick and low cost and allows for great flexibility in the design of new components and parts. Due to the fact that components and parts made by additive manufacture (AM) can be quickly made in a custom designed form, as required, AM also brings benefits in that stocks of components do not need to be manufactured and stored to be available as needed. AM parts can be made of relatively light, but strong materials. As AM is becoming more popular in many industries, there is interest in manufacturing heat exchangers using AM.

In conventional heat exchanger channels, the viscous fluids that are commonly used create a thick boundary layer at the walls of the channels. This boundary layer presents a resistance to heat exchange across the channel walls and reduces the amount of energy that can be transferred through the channel wall by heat exchange. Additive manufacturing provides the opportunity to create new shapes of heat exchanger channel to address this problem. An additively manufactured heat exchanger core according to the preamble of claim 1 is disclosed in US 2019/033013 A1.

One type of AM heat exchanger design has a so-called weave core in which wavy channels are formed for the hot and cold fluid and the hot and cold fluid channels are interwoven in a continuous manner. Such designs are typically cross-flow designs where the hot fluid flows through wavy channels in one direction and the cold fluid flows through wavy channels interlaced through the hot flow channels in a direction transverse to the one direction. The integrated geometry of the weave makes such heat exchangers most suitable for single pass designs - i.e. where the hot and cold fluid enters their respective channels at one end on one side/end of the core and exits at the opposite end.

In applications where heat exchangers are used in high temperature conditions, and where the temperature difference between the first and second medium is large, thermal stresses at points of high temperature difference can result in thermal inefficiencies and even damage to the heat exchanger. There is a desire to provide a heat exchanger core design where such stresses can be reduced.

### SUMMARY

According to the invention, there is provided a heat exchanger core as defined by claim 1.

The heat exchanger core is preferably a cross-flow design, but may also be a counter-flow design.

In embodiments, the ends of either or both of the first medium channels and the second medium channels have the first cross-sectional shape along their length except for at one or both ends, where the shape is morphed to the first cross-sectional shape. In other embodiments, the shape may morph to the second cross-sectional shape at other locations along the channel length.

The core channels are preferably made using additive manufacturing, although it is conceivable that other manufacturing methods may be used.

Thermal stresses are usually highest at the interface of hot medium channels and so this is an ideal location for the shape change, but the change might provide benefits in cold channels.

Also provided is a heat exchanger comprising such a heat exchanger core.

### BRIEF DESCRIPTION

Examples according to the disclosure will now be described with reference to the drawings. It should be noted that these are examples only and that variations are possible within the scope of the claims.
Figure 1 is a 3D view of a heat exchanger which can have a core design according to the disclosure.
Figure 2 shows a cross-section of part of a heat exchanger with a core design according to the disclosure.
Figure 3 shows, in close-up, a detail of the heat exchanger of Fig. 2.
Figure 4A shows a typical shape of channel outlets, for comparison.
Figure 4B shows an example of channel outlet shapes according to this disclosure.
Figure 5A shows an example of a channel formed according to this disclosure.
Figure 5B shows a detailed view of an end of a channel such as shown in Fig. 5A.
Figure 6 is an example of a heat exchanger core according to this disclosure.

### DETAILED DESCRIPTION

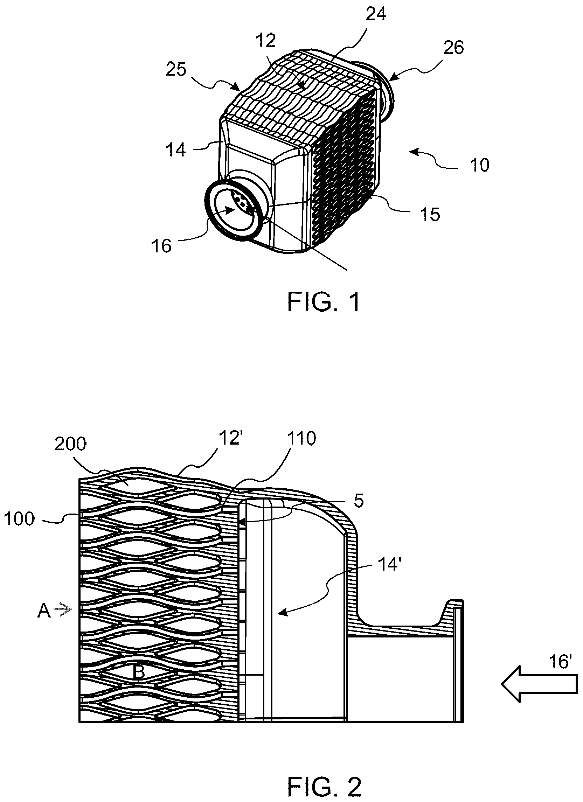

Fig. 1 shows a heat exchanger 10 the core 12 of which can be a typical heat exchanger core, but which can also have a heat exchanger core in accordance with the disclosure.

As is conventional, the heat exchanger 10 has a core 12 in the form of a block of channels for a first medium (e.g. hot air) and a second medium (e.g. cold air) arranged such that heat transfer takes place between the mediums where their channels contact each other. Some heat exchangers have a counter-flow design in which the channels of the first medium and the channels of the second medium are parallel but the first and second mediums flow in opposite directions. Other heat exchangers have a cross-flow design in which the channels of the first medium are directed across (perpendicular to) the channels of the second medium so that the first medium and the second medium flow across (perpendicular to) each other. The design shown in Fig. 1 is a cross-flow design. The first medium flows into the core 12 via a first manifold 14 at one end of the core 12, having a first medium inlet 16. A second manifold 24 is provided at the opposite end of the core 12 and has a first medium outlet 26. The first medium inlet and the first medium outlet are in fluid communication with respective ends of the channels for the first medium such that the first medium flows into the first medium inlet 16, through the channels for the first medium and out of the first medium outlet 26.

The second medium enters the channels for the second medium, which, in this example, are formed in the core 12 across the plane of the channels for the first medium. The second medium enters these channels at a second medium inlet 15, flows through the channels for the second medium, across the channels through which the first medium flow, thus exchanging heat with the first medium, and exits the core at the second medium outlet 25. At the respective outlet, the medium that is colder at the inlet has become warmer, and the medium that is warmer at the inlet has become cooler.

In order to provide improved heat transfer properties, and since additive manufacturing techniques have made it possible to easily manufacture different shapes of channels, many heat exchanger cores have wavy or woven channels rather than straight channels. A wavy channel improves heat transfer properties by creating turbulence as the medium flows through the channel, and can also increase the heat transfer area for a given length of channel. In such weave core designs, the hot medium and cold medium channels are interwoven in a cross-flow configuration.

In applications where heat exchangers are used in high temperature conditions, and where the temperature difference between the first and second medium is large, thermal stresses at points of high temperature difference can result in thermal inefficiencies and even damage to the heat exchanger. There is a desire to provide a heat exchanger core design where such stresses can be reduced.

The heat exchanger core design according to this disclosure reduces stresses at temperature difference interfaces by modifying the shape of channels through which one or both of the first and second medium flow, at locations along their length e.g. at their inlets and/or outlets and/or at other points between their inlet and outlet ends such that the channels have one or more locations where the channel transitions to have a shape (cross-sectional shape) that is different from the shape at other locations along the length.

This will be described further, by way of example, with reference to Figs. 2 to 6.

Figure 2 shows one end of a heat exchanger such as described above. It should be noted that the core channel design of this disclosure could be incorporated into different types of heat exchanger.

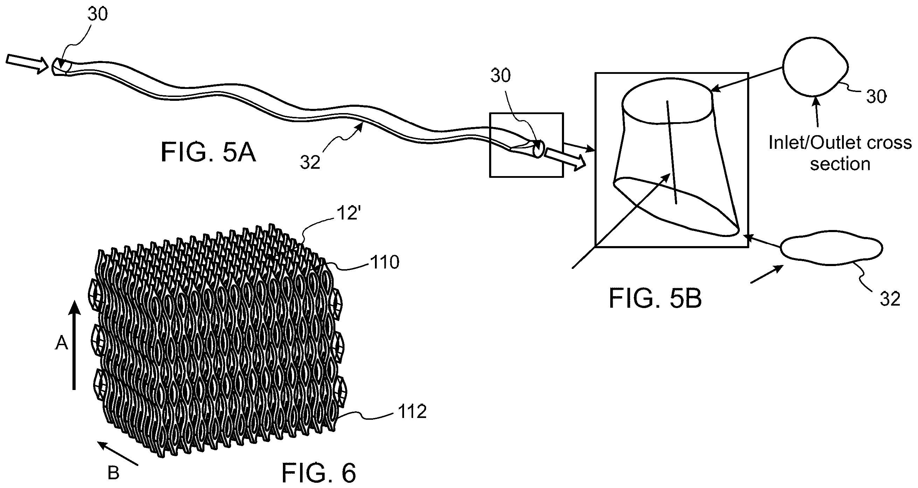

In the example shown, the heat exchanger core 12' comprises a set of first medium channels 100 arranged for flow of a first medium from a first end 110 to a second, opposite end 112 (not shown in Fig. 2, but seen in Fig. 6) in a first direction A. A set of second medium channels 200 is interwoven between the first medium channels 100 and arranged for flow of a second medium from a first end to a second end in a cross-flow direction B (into the plane of the paper in Fig. 2) relative to the direction A of the first channels 100. As is known in the art, the channels have a wavy configuration from one end to the other. The first and second medium channels may have different cross-sections and patterns. In the example show, the first medium is a hot fluid and fig. 2 shows the inlet 16' at manifold 14' via which the hot fluid (e.g. hot air) flows into the first medium channels 100 of the core 12'. The features of this disclosure can apply to the inlet end of the first (here hot) medium channels as shown. In addition, or alternatively, the features can be applied to the outlet end of those channels and/or the inlet and/or outlet ends of the second (here cold) medium channels and/or to other points along the first and/or second medium channels.

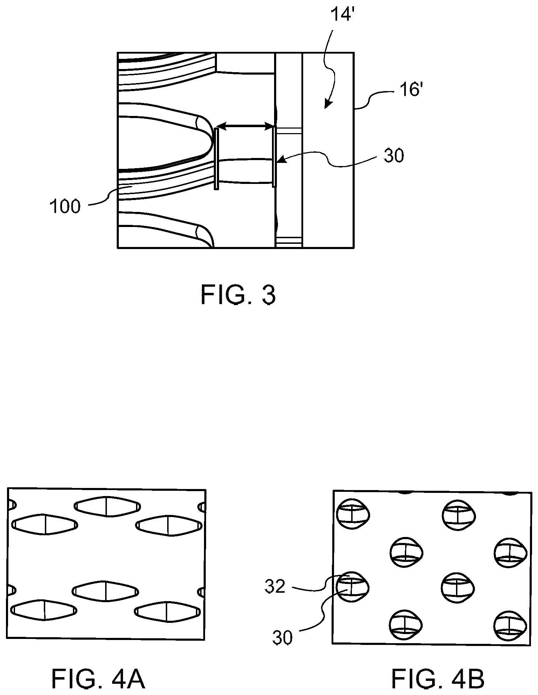

Particularly in high temperature conditions, as mentioned above, especially during heating or cooling, high thermal stresses occur e.g. in the region of the channel inlets and outlets and the manifolds where they interface with the core. To reduce the thermal stresses due to the large temperature difference occurring in such heat exchangers, the channels, according to this disclosure, have one or more portions along their length that is morphed to a different cross-sectional shape compared to other portions of the channel. One example of this, where the shape of the channels is morphed at the first medium inlet 16', can best be seen in Fig. 3 which shows a 'morphed' section at the end of the channel 100. The length of the morphed section is not essential to the disclosure and will depend on the specific application. The morphed portion of the channel is particularly advantageous when used for channels in which the hot medium flows, but can still have advantages in cold medium channels.

The effect of the morphing of the channel at one portion (here the inlet end) can be seen by comparing Figs. 4A and 4B. Fig. 4A shows channels with a uniform cross-sectional shape along their length as is conventional. In contrast, Fig. 4B shows the channels according to the invention, where one portion is morphed (i.e. transitions to a different cross-sectional shape - here more flattened) relative to other portions 32 of the channel.

An example of a channel in which a portion (here the end) is morphed to have a different shape is seen in Figs. 5A and 5B. The channel cross-sectional shape for the non-morphed portions (here between the ends) is a regular shape such as an elliptical or lozenge shape 32 whereas the end portions 30 are morphed or misshapen (e.g. to a circular or other shape) compared to the other portion 32. The cross-sectional shape of the morphed portion(s) may take one of a variety of shapes different from the shape of the non-morphed portion. The transition from the non-morphed shape to the morphed shape should be smooth and gradual to avoid further increases in stress.

The 'morphing' is a geometrical transition from one shape to another. The actual overall cross-sectional area of the channel, however, does not change substantially from the non-morphed portion to the morphed portion and so the shape change will not have a significant impact on pressure drop.

The design of the channels according to this disclosure allows thermal stresses at temperature interfaces e.g. between the core and the manifolds to be reduced making the heat exchanger more resistant to stress and the core more resistant to low cycle fatigue, LCF. It has been found that by providing a morphed portion in the channel, the stress of the whole core is reduced.

## Claims

1. A heat exchanger core comprising a plurality of first medium channels (100) along which a first medium is directed from a first first medium channel end (110) to a second first medium channel end (112), and a plurality of second medium channels (200) along which a second medium is directed from a first second medium channel end to a second second medium channel end, **characterised in that**:
the first medium channels (100) and/or the second medium channels (200) are formed to have a first portion having a first cross-sectional geometric shape and one or more second portions having a second, different cross-sectional geometric shape, the second, different cross-sectional geometric shape being a relatively flatter geometric shape than the first cross-sectional geometric shape, and wherein the channel transitions smoothly from the first to the second cross-sectional geometric shape; **characterized in that**
the plurality of first medium channels (100) run in a direction transverse to the plurality of second medium channels (200).

2. The heat exchanger core of claim 1, comprising a plurality of layers each having a plurality of first medium channels (100), each layer separated by a layer of second medium channels (200).

3. The heat exchanger core of any preceding claim, wherein the one or more second portions is provided at one or both ends of the first medium channels (100) and the first portion is the portion of the first medium channels between the ends.

4. The heat exchanger core of any preceding claim, wherein the one or more second portions is provided at one or more locations between the ends of the first medium channels (100).

5. The heat exchanger core of any preceding claim, wherein the first cross-sectional geometric shape is an elliptical shape and the second cross-sectional geometric shape is a non-elliptical shape.

6. The heat exchanger core of any of claims 1 to 4, wherein the first cross-sectional geometric shape is a substantially circular shape.

7. The heat exchanger core of any preceding claim formed by additive manufacture.

8. A heat exchanger comprising an inlet manifold (14) and an outlet manifold (24) and a heat exchanger core (12') as claimed in any preceding claim located with and in fluid communication with the inlet manifold and the outlet manifold.

9. The heat exchanger of claim 8, wherein each first first medium channel end is in fluid communication with the inlet manifold (14) and each second first medium channel end is in fluid communication with the outlet manifold (24).

10. The heat exchanger of claim 8 or 9, further comprising a second fluid inlet in fluid communication with the first second medium channel end and a second fluid outlet in fluid communication with the second second medium channel end.

## Patentansprüche

1. Wärmetauscherkern, umfassend eine Vielzahl von ersten Mediumkanälen (100), entlang derer ein erstes Medium von einem ersten Ende (110) eines ersten Mediumkanals zu einem zweiten Ende (112) eines ersten Mediumkanals geleitet wird, und eine Vielzahl von zweiten Mediumkanälen (200), entlang derer ein zweites Medium von einem ersten Ende eines zweiten Mediumkanals zu einem zweiten Ende eines zweiten Mediumkanals geleitet wird, **dadurch gekennzeichnet, dass**:
die ersten Mediumkanäle (100) und/oder die zweiten Mediumkanäle (200) ausgebildet sind, um einen ersten Abschnitt, der eine erste geometrische Querschnittsform aufweist, und einen oder mehrere zweite Abschnitte, die eine zweite, unterschiedliche geometrische Querschnittsform aufweisen, aufzuweisen, wobei die zweite, unterschiedliche geometrische Querschnittsform eine relativ flachere geometrische Form als die erste geometrische Querschnittsform ist, und wobei der Kanal sanft von der ersten zu der zweiten geometrischen Querschnittsform übergeht; **dadurch gekennzeichnet, dass**
die Vielzahl von ersten Mediumkanälen (100) in einer Richtung quer zu der Vielzahl von zweiten Mediumkanälen (200) verlaufen.

2. Wärmetauscherkern nach Anspruch 1, umfassend eine Vielzahl von Schichten, die jeweils eine Vielzahl von ersten Mediumkanälen (100) aufweisen, wobei jede Schicht durch eine Schicht von zweiten Mediumkanälen (200) getrennt ist.

3. Wärmetauscherkern nach einem der vorhergehenden Ansprüche, wobei der eine oder die mehreren zweiten Abschnitte an einem oder an beiden Enden der ersten Mediumkanäle (100) vorgesehen ist beziehungsweise sind und der erste Abschnitt der Abschnitt der ersten Mediumkanäle zwischen den Enden ist.

4. Wärmetauscherkern nach einem der vorhergehenden Ansprüche, wobei der eine oder die mehreren zweiten Abschnitte an einer oder an mehreren Stellen zwischen den Enden der ersten Mediumkanäle (100) vorgesehen ist beziehungsweise sind.

5. Wärmetauscherkern nach einem der vorhergehenden Ansprüche, wobei die erste geometrische Querschnittsform eine elliptische Form ist und die zweite geometrische Querschnittsform eine nicht-elliptische Form ist.

6. Wärmetauscherkern nach einem der Ansprüche 1 bis 4, wobei die erste geometrische Querschnittsform eine im Wesentlichen kreisförmige Form ist.

7. Wärmetauscherkern nach einem der vorhergehenden Ansprüche, der durch additive Fertigung ausgebildet ist.

8. Wärmetauscher, umfassend einen Einlassverteiler (14) und einen Auslassverteiler (24) und einen Wärmetauscherkern (12') nach einem der vorhergehenden Ansprüche, der an dem Einlassverteiler und dem Auslassverteiler angeordnet ist und mit diesen in Fluidverbindung steht.

9. Wärmetauscher nach Anspruch 8, wobei jedes erste Ende eines ersten Mediumkanals in Fluidverbindung mit dem Einlassverteiler (14) steht und jedes zweite Ende eines ersten Mediumkanals in Fluidverbindung mit dem Auslassverteiler (24) steht.

10. Wärmetauscher nach Anspruch 8 oder 9, ferner umfassend einen zweiten Fluideinlass, der in Fluidverbindung mit dem ersten Ende eines zweiten Mediumkanals steht, und einen zweiten Fluidauslass, der in Fluidverbindung mit dem zweiten Ende eines zweiten Mediumkanals steht.

## Revendications

1. Noyau d'échangeur de chaleur comprenant une pluralité de premiers canaux de milieu (100) le long desquels un premier milieu est dirigé d'une première extrémité de premier canal de milieu (110) à une seconde extrémité de premier canal de milieu (112), et une pluralité de seconds canaux de milieu (200) le long desquels un second milieu est dirigé d'une première extrémité de second canal de milieu à une seconde extrémité de second canal de milieu, **caractérisé en ce que** :
les premiers canaux de milieu (100) et/ou les seconds canaux de milieu (200) sont formés de manière à avoir une première partie ayant une première forme géométrique en coupe transversale et une ou plusieurs secondes parties ayant une seconde forme géométrique en coupe transversale différente, la seconde forme géométrique en coupe transversale différente étant une forme géométrique relativement plus plate que la première forme géométrique en coupe transversale, et dans lequel le canal effectue une transition progressive entre la première et la seconde forme géométrique en coupe transversale ; **caractérisé en ce que**
la pluralité de premiers canaux de milieu (100) se prolonge dans une direction transversale à la pluralité de seconds canaux de milieu (200).

2. Noyau d'échangeur de chaleur selon la revendication 1, comprenant une pluralité de couches ayant chacune une pluralité de premiers canaux de milieu (100), chaque couche étant séparée par une couche de seconds canaux de milieu (200).

3. Noyau d'échangeur de chaleur selon une quelconque revendication précédente, dans lequel les une ou plusieurs secondes parties sont fournies au niveau d'une ou des deux extrémités des premiers canaux de milieu (100) et la première partie est la partie des premiers canaux de milieu entre les extrémités.

4. Noyau d'échangeur de chaleur selon une quelconque revendication précédente, dans lequel les une ou plusieurs secondes parties sont fournies au niveau d'un ou plusieurs emplacements entre les extrémités des premiers canaux de milieu (100).

5. Noyau d'échangeur de chaleur selon une quelconque revendication précédente, dans lequel la première forme géométrique en coupe transversale est une forme elliptique et la seconde forme géométrique en coupe transversale est une forme non elliptique.

6. Noyau d'échangeur de chaleur selon l'une quelconque des revendications 1 à 4, dans lequel la première forme géométrique en coupe transversale est une forme sensiblement circulaire.

7. Noyau d'échangeur de chaleur selon une quelconque revendication précédente formé par fabrication additive.

8. Échangeur de chaleur comprenant un collecteur d'entrée (14) et un collecteur de sortie (24) et un noyau d'échangeur de chaleur (12') selon une quelconque revendication précédente situé avec et en communication fluidique avec le collecteur d'entrée et le collecteur de sortie.

9. Échangeur de chaleur selon la revendication 8, dans lequel chaque première extrémité de premier canal de milieu est en communication fluidique avec le collecteur d'entrée (14) et chaque seconde extrémité de premier canal de milieu est en communication fluidique avec le collecteur de sortie (24).

10. Échangeur de chaleur selon la revendication 8 ou 9, comprenant en outre une seconde entrée de fluide en communication fluidique avec la première extrémité de second canal de milieu et une seconde sortie de fluide en communication fluidique avec la seconde extrémité de second canal de milieu.
